# EUROPEAN PATENT SPECIFICATION

(11) **EP 3 168 156 B1**
(45) Date of publication and mention of the grant of the patent: **10.04.2019**
(21) Application number: 15194822.1
(22) Date of filing: 16.11.2015
(51) Int. Cl.: B64D 35/00, F16H 35/00

(54) **AIRCRAFT PROPELLER DRIVE SYSTEM**
FLUGZEUGPROPELLERANTRIEBSSYSTEM
SYSTÈME D'ENTRAÎNEMENT D'HÉLICE D'AVION

(43) Date of publication of application: 17.05.2017
(73) Proprietor: BRP-Rotax GmbH & Co. KG, 4623 Gunskirchen (AT)
(72) Inventor: BAYERL, Johann, 4651 Stadl-Paura (AT); MITTERMAIER, Harald, 4926 St. Marienkirchen am Hausruck (AT); DOPONA, Michael, 4550 Bad Hall (AT)
(74) Representative: Nicolle, Olivier

(56) References cited:
- DE-A1-102010 054 405
- JP-A- H05 164 191
- KR-A- 20140 138 401
- US-A- 2 350 377
- US-A1- 2006 225 690
- US-A1- 2013 227 950

## Description

### FIELD OF TECHNOLOGY

The present technology relates to aircraft propeller drive systems.

### BACKGROUND

Many airplanes are powered by one or more propellers driven by one or more intermittent combustion internal combustion engines, such as two-stroke or four-stroke internal combustion engines. In many such airplanes, during operation, the engine turns a propeller having propeller blades for which the pitch can be changed, which is commonly referred to as a variable-pitch propeller. In order to address the changes in power requirements, the pitch of the propeller blades of the propeller can be changed instead necessarily having to change the speed of the engine.

Each engine is connected to its corresponding propeller via a propeller drive system. The propeller drive system typically includes a plurality of gears arranged such that the propeller turns at a slower speed than a crankshaft of the engine.

Due to its mass and dimensions, the propeller has a high moment of inertia. Therefore, for a given operating condition of the engine, when the propeller turns during operation of the airplane, it tends to do so at a constant speed. On the other hand, the speed of rotation of the crankshaft of the engine varies. The speed of rotation varies as a result of the variation of the sum of the combustion forces and the forces of the oscillating and rotating masses of the engine, such as the pistons. The angular positions of the crankshaft at which the maximum speed of rotation of the crankshaft occurs depend on the predominating forces that are a result of at least the type of engine cycle (two-stoke, four-stroke...), the number of cylinders, and the configuration of the cylinders (inline, V-type, boxer...). Looking only at the combustion forces, the speed of rotation of the crankshaft increases during power strokes of the engine and decreases during compression strokes of the engine. As a result, for a given operating condition of the engine, the portion of the propeller drive system that is connected to the propeller rotates at a constant speed, but the portion of the propeller drive system that is connected to the crankshaft of the engine varies in speed. This causes stress and wear of the gears in the propeller drive system and also causes noise and vibration.

Also, should resonance of the propeller drive system occur, the vibrations increase and the problems associated with these vibrations are exacerbated. In order to avoid resonance during most operating conditions, some propeller drive systems are designed with a stiffness that results in a resonance frequency that occurs at a speed of rotation that is below the idle speed of the engine. Therefore, during the normal operation range of the engine, which is at idle speed and higher, resonance of the propeller drive system should not occur. However, during engine start-up, the engine goes from rest to the idle speed of the engine, and as such at some point will turn at the speed that causes resonance of the propeller drive system. As such, during engine start-up, resonance of the propeller drive system occurs, which causes strong vibrations and may even cause the crankshaft to rotate backwards momentarily. As a result, the engine control unit that is responsible for the control of the fuel injection and ignition, among other things, may receive erroneous signals regarding the speed of rotation and position of the crankshaft, which could prevent successful engine start-up.

U.S. Patent 2,350,377 to Tjaarda discloses a drive mechanism for rotating the propeller shaft of an aircraft. The drive mechanism includes a gear fixed to a hollow propeller shaft. The gear has an outer gear ring, an inner hub member and a flexible coupling disposed radially between the outer gear ring and the inner hub member.

U.S. Patent Application Publication 2006/225690 to Arov discloses a non linear torque altering transmission that can be used with a device having a pulsating torque cycle characteristic such as a reciprocating piston engine, an AC compressor and wind driven turbines. The transmission includes a gear train of cooperating gears that produce a varying leverage effect during each cycle. In some implementations, the gear train includes elliptical or otherwise non-circular gears.

German Patent Application Publication DE 10 2010 054405 discloses a drive system for transmitting power from an engine's crankshaft to a fuel pump via non-circular gears.

Japanese Patent Application Publication JP H05 164191 discloses a variable torque reducing device, including a plurality of elliptical gears, which is configured to reduce varying torque and alleviate a burden of a shaft or bearing.

There is therefore a need for a propeller drive system that can dampen the torque peaks associated with the changes in speed of the crankshaft during operation of the engine and/or can avoid or reduce the impact of resonance of the propeller drive system during start-up of the engine.

### SUMMARY

It is an object of the present technology to ameliorate at least some of the inconveniences present in the prior art.

According to one aspect of the present technology, there is provided an aircraft propeller drive system for an aircraft having an intermittent combustion internal combustion engine for driving a propeller via the propeller drive system. The propeller drive system has a first non-circular gear adapted to be operatively connected to and driven by the engine, the first non-circular gear having a plurality of lobes and a plurality of depressions, a second non-circular gear driven by the first non-circular gear, the second non-circular gear having a plurality of lobes and a plurality of depressions, the first and second non-circular gears having a variable gear ratio, a flexible coupling assembly driven by the second non-circular gear, and an output shaft driven by the flexible coupling assembly. The output shaft is adapted for being connected to the propeller;
wherein the second non-circular gear has: a number of lobes corresponding to a number of power strokes of the engine per rotation of a crankshaft of the engine multiplied by a mean gear ratio of the first and second non-circular gears; and a number of depressions corresponding to the number of power strokes of the engine per rotation of the crankshaft multiplied by the mean gear ratio.

According to some implementations of the present technology, during operation, a variation in speed of rotation of the second non-circular gear is smaller than a variation in speed of rotation of the first non-circular gear.

According to some implementations of the present technology, the gear ratio varies by at least ±1.0 percent.

According to some implementations of the present technology, the gear ratio varies by ±1.8 percent.

According to some implementations of the present technology, the first non-circular gear has: a number of lobes corresponding to a number of power strokes of the engine per rotation of a crankshaft of the engine; and a number of depressions corresponding to the number of power strokes of the engine per rotation of the crankshaft.

According to some implementations of the present technology, the first non-circular gear has two lobes and two depressions.

According to some implementations of the present technology, the second non-circular gear has five lobes and five depressions.

According to some implementations of the present technology, the flexible coupling assembly includes an input member connected to and driven by the second non-circular gear, a flex disc connected to and driven by the input member, and an output member connected to and driven by the flex disc. The flex disc is disposed between the input and output members. The output member is connected to and drives the output shaft. The flex disc dampens torsional vibrations between the input and output members.

According to some implementations of the present technology, a clutch operatively connects the second non-circular gear to the flexible coupling assembly.

According to some implementations of the present technology, the engine is a four-stroke, four-cylinder engine.

According to some implementations of the present technology, the second non-circular gear, the flexible coupling assembly and the output shaft are coaxial and are rotatable about a common rotation axis.

According to another aspect of the present technology, there is provided an aircraft having a fuselage; wings connected to the fuselage; an intermittent combustion internal combustion engine connected to one of: the fuselage, and one of the wings; a propeller drive system connected to the engine; and a propeller connected to the propeller drive system and driven by the engine via the propeller drive system. The propeller drive system is in accordance with the previously mentioned aspect of the present technology or this aspect in combination with one or more of the previously mentioned implementations.

According to another aspect of the present technology, there is provided a method for transmitting power from an intermittent combustion internal combustion engine to a propeller of an aircraft. The propeller is connected to an output shaft. The method comprises: driving a variable gear ratio gear set with the engine, the gear set including a first non-circular gear driven by the engine and a second non-circular gear driven by the first non-circular gear; driving a flexible coupling assembly with the second non-circular gear; and driving the output shaft with the flexible coupling assembly.

For purposes of the present application, the term "intermittent combustion internal combustion engine" refers to an engine which operates as a result of the periodic combustion of air and fuel, such as in a two-stroke, four-stroke or Wankel rotary engine. Also for purposes of the present application, terms related to spatial orientation such as forward, rearward, left and right are as they would be understood by a pilot of an aircraft sitting in the aircraft in a normal piloting position with the aircraft being at 0 degree of pitch and 0 degree of roll.

Implementations of the present technology each have at least one of the above-mentioned object and/or aspects, but do not necessarily have all of them.

Additional and/or alternative features, aspects and advantages of implementations of the present technology will become apparent from the following description, the accompanying drawings and the appended claims.

### BRIEF DESCRIPTION OF THE DRAWINGS

For a better understanding of the present technology, as well as other aspects and further features thereof, reference is made to the following description which is to be used in conjunction with the accompanying drawings, where:
Figure 1 is a left side view of an airplane;
Figure 2 is a schematic right side elevation view of an engine, propeller drive system and propeller of the airplane of Fig. 1;
Figure 3 is a perspective view taken from a front, right side of the engine of Fig. 1;
Figure 4 is a perspective view taken from a rear, right side of the propeller drive system of Fig. 2;
Figure 5 is a perspective view taken from a rear, right side of a longitudinal cross-section of the propeller drive system of Fig. 4;
Figure 6 is a right side elevation view of the propeller drive system of Fig. 4;
Figure 7 is a longitudinal cross-section of the propeller drive system of Fig. 4;
Figure 8 is a front elevation view of an input gear of the propeller drive system of Fig. 4;
Figure 9 is a front elevation view of a gear driven by the input gear of Fig. 8 of the propeller drive system of Fig. 4;
Figure 10A is a schematic illustration of the gears of Figs. 8 and 9 with a non-circularity of the gears being exaggerated for understanding with the gears in a position corresponding to a minimum gear ratio;
Figure 10B is a schematic illustration of the gears of Figs. 8 and 9 with a non-circularity of the gears being exaggerated for understanding with the gears in a position corresponding to a maximum gear ratio; and
Figure 11 is a partially exploded perspective view taken from a rear, right side of a flexible coupling assembly of the propeller drive system of Fig. 4.

### DETAILED DESCRIPTION

The present technology will be described with respect to an airplane having a single variable pitch propeller powered by an intermittent combustion internal combustion engine. It is contemplated that at least some aspects of the present technology could be applied to an airplane having a fixed pitch propeller and/or having multiple propellers and/or in a different type of aircraft.

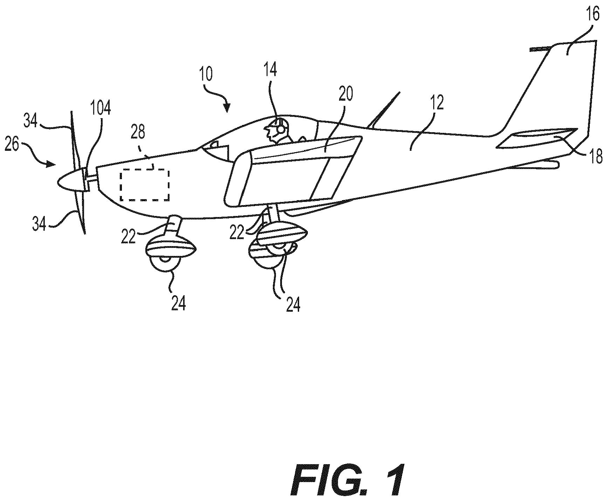

As can be seen in Fig. 1, an aircraft, specifically an airplane 10, has a fuselage 12 defining a cockpit 14 for accommodating a pilot. It is contemplated that the fuselage 12 and the cockpit 14 could be designed to also accommodate one or more passengers. A vertical stabilizer 16 is connected to the rear end of the fuselage 12. A pair of horizontal stabilizers 18 (only the left one being shown) is connected to the vertical stabilizer 16. A pair of wings 20 (only the left one being shown) is connected to the bottom of the fuselage 12. It is contemplated that the wings 20 could be connected to the top or the sides of the fuselage 12. It is also contemplated that airplane 10 could have more than two wings 20 and/or that the wings 20 could be integrally formed with the fuselage 12. Three landing gears 22 are provided on the bottom of the fuselage 12. In the present implementation, the landing gears 22 are provided with wheels 24 and are not retractable. It is contemplated that other types of landing gears 22 could be used. For example, the wheels 24 could be replaced with skis, skids or floats and/or the landing gears 22 could be retractable. A variable pitch propeller 26 is provided at the front of the fuselage 12. It is contemplated that the airplane 10 could have two or more propellers 26 and/or that the propeller(s) 26 could be provided on the wings 20 or elsewhere on the airplane 10. It is also contemplated that the propeller 26 could be a fixed pitch propeller 26. The engine 28 (schematically shown in Fig. 1) powering the the propeller 26 is located in and connected to the front of the fuselage 12. The airplane 10 has many other components, but these will not be described herein.

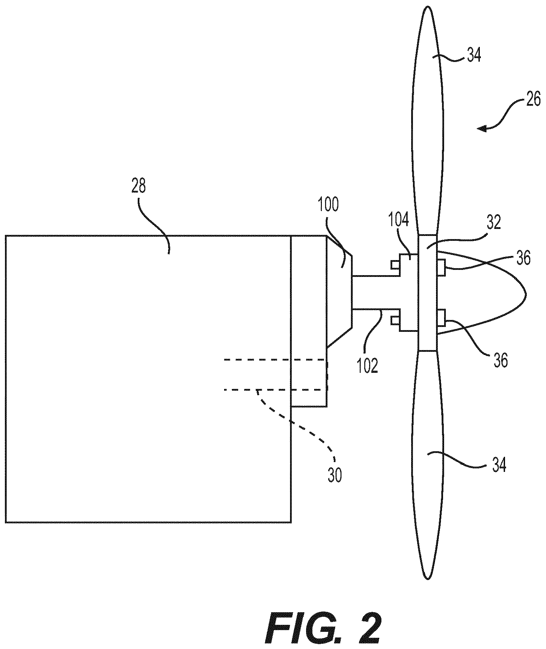

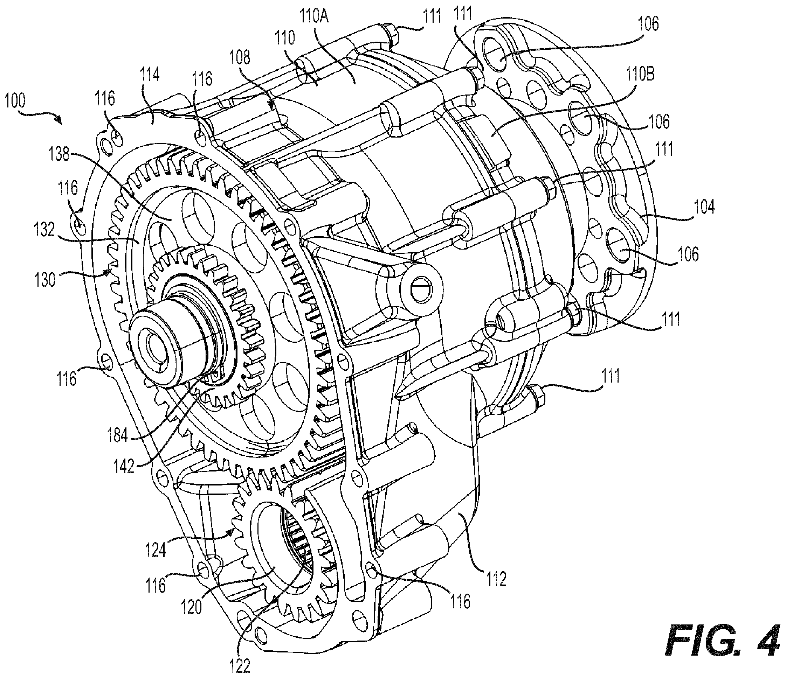

As can be seen in Fig. 2, the propeller 26 is driven by the engine 28 via a propeller drive system 100. The engine 28 has a crankshaft 30 (schematically shown in Fig. 2), that drives the propeller drive system 100. The propeller drive system 100 has a hollow output shaft 102 defining a propeller mounting flange 104. It is contemplated that the output shaft 102 could be solid or only partially hollow. As can be seen in Fig. 1, the flange 104 is located outside the fuselage 12. The propeller mounting flange 104 defines a plurality of holes 106 (see Fig. 4). The propeller 26 has a central hub 32 from which the propeller blades 34 extend. The central hub 32 defines holes (not shown) corresponding to at least some of the holes 106 in the propeller mounting flange 104. Fasteners 36 are inserted through the holes in the central hub 32 of the propeller 26 and through the holes 106 of the flange 104 to fasten the propeller 26 to the flange 104.

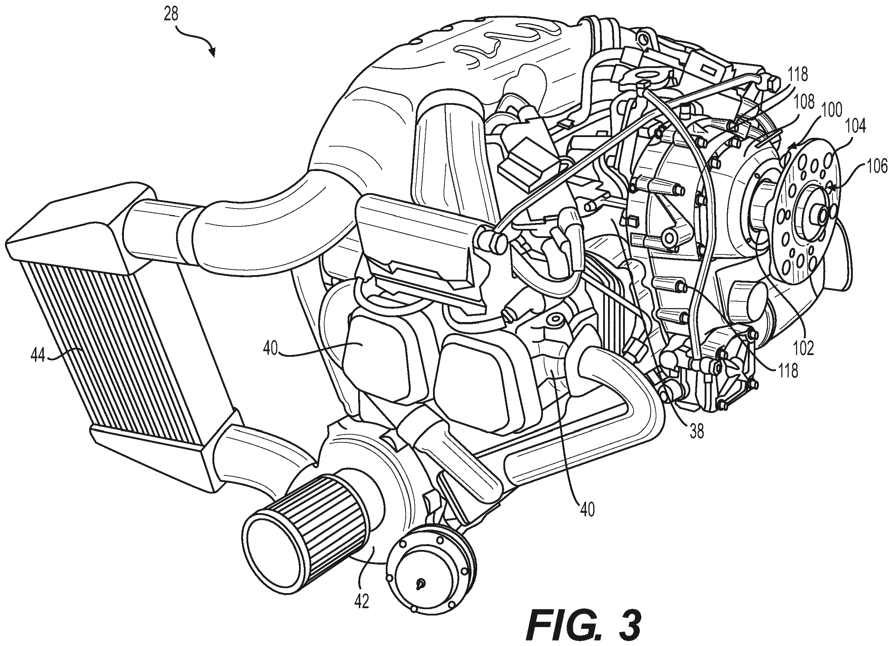

The engine 28 is best seen in Fig. 3. The engine 28 is an intermittent combustion internal combustion engine. In the present implementation, the engine 28 is a fuel injected, four-stroke boxer engine 28, such as the Rotax 915 iS™ for example. Other types of intermittent combustion internal combustion engines are contemplated, such as, but not limited to, inline engines, two-stroke engines, and Wankel rotary engines. The engine 28 has a central crankcase 38 and four horizontally extending cylinders 40 (two on each side). The crankshaft 30 is rotationally supported in and extends from the crankcase 38. The reciprocating motion of the pistons (not shown) inside the cylinders 40 rotate the crankshaft 30. The engine 28 is also provided with a turbocharger 42 and an intercooler 44, but it is contemplated that these components could be omitted. The engine 28 has many other components, but these will not be described herein.

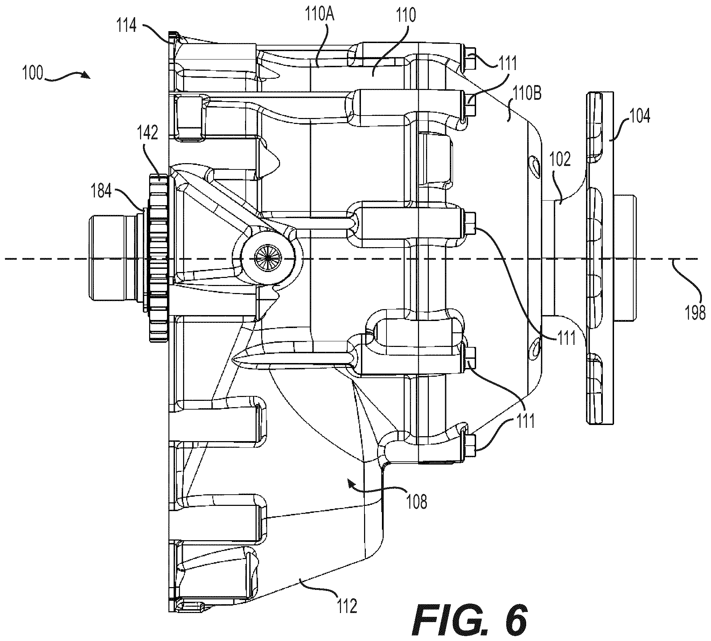

Turning now to Figs. 4 to 11, the propeller drive system 100 will be described herein. The propeller drive system 100 has a housing 108 inside which most of the components described below are housed. The housing 108 has an upper portion 110 and a lower generally frustoconical portion 112. The upper portion 110 has a generally cylindrical portion 110A and a generally frustoconical portion 110B fastened to a front of the portion 100A by fasteners 111. The lower generally frustoconical portion 112 is integrally formed with the generally cylindrical portion 110A of the upper portion 110. As can be seen, the lower portion 112 is smaller than the upper portion 110. As best seen in Fig. 6, the output shaft 102 extends from a front of the upper portion 110 of the housing 108. The rear end of the housing 108 defines a flange 114. The flange 114 defines a plurality of apertures 116. Fasteners 118 (only some of which are labeled for clarity) are inserted through the apertures 116 to fasten the housing, and therefore the propeller drive system 100, to the front of the engine 28 as shown in Fig. 3.

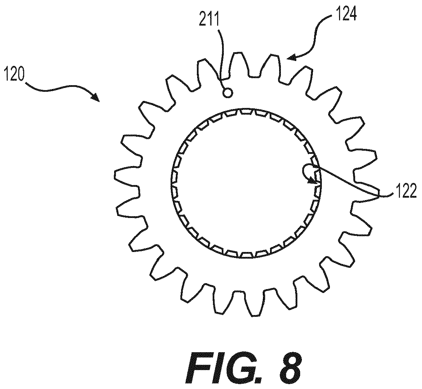

The propeller drive system 100 has an input gear 120 located in the lower portion 112 of the housing 108. The input gear 120 has internal splines 122 and a plurality of external teeth 124 (best seen in Fig. 8). The crankshaft 30 extends through the input gear 120. The crankshaft 30 has external splines that engage the internal splines 122 of the input gear 120 such that the crankshaft 30 drives the input gear 120. The end of the crankshaft 30 is received in a recess 126 formed in the lower portion 112 of the housing 108. A bearing 128 is disposed around the end of the crankshaft 30 to rotationally support the end of the crankshaft in the recess 126.

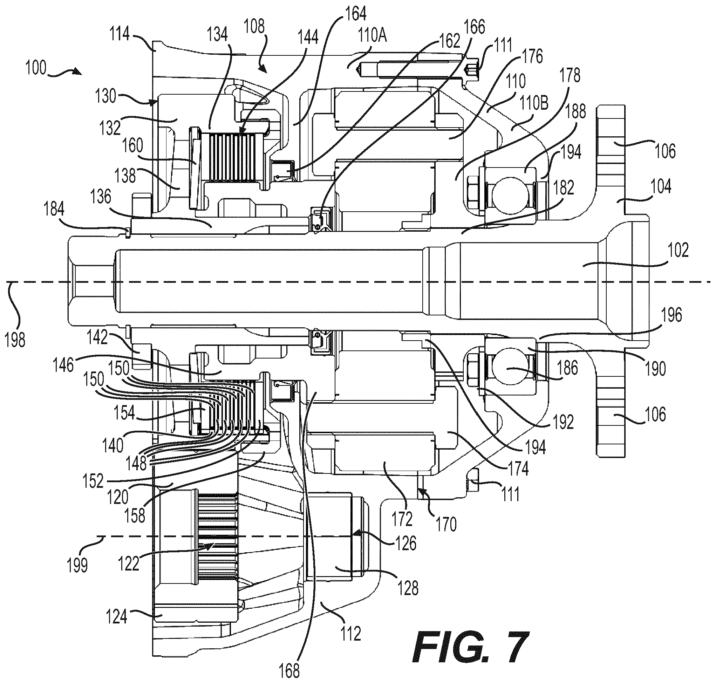

The plurality of external teeth 124 of the input gear 120 engages a plurality of external teeth 130 of a gear 132 such that the input gear 120 drives the gear 132. As can be seen, the gear 132 has a larger diameter than the input gear 120. The gear 132 defines an outer sleeve 134 and an inner sleeve 136. A body or web 138 of the gear extends radially between the sleeves 134, 136. A plurality of internal teeth 140 (see Fig. 7) are defined by the outer sleeve 134. The gears 120 and 132 will be described in more detail below. A gear 142 is connected to a rear end of the inner sleeve 136. The gear 142 engages a gear (not shown) connected to a governor (not shown).

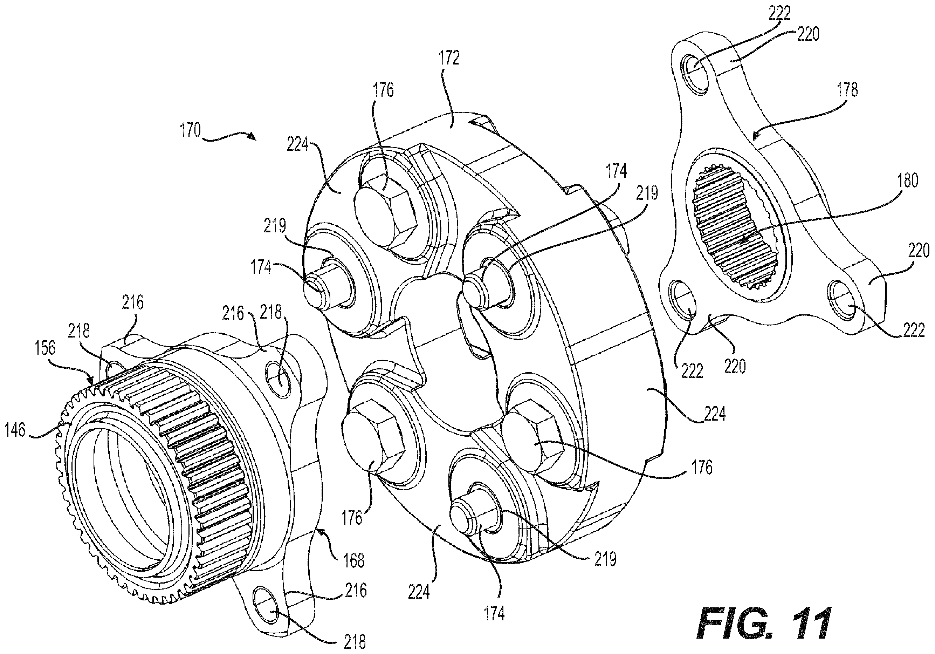

The propeller drive system 100 also has a slip friction clutch 144. In the present implementation, the slip friction clutch 144 is a multiple-disk friction clutch, but it is contemplated that other types of friction clutches could be used. The friction clutch 144 has a driving member formed by the outer sleeve 134 of the gear 132, a driven member 146, driving friction disks 148, driven friction disks 150, a front annular plate 152, and a rear annular plate 154. The driving and driven friction disks 148, 150 are disposed in an alternating arrangement between the front and rear annular plates 152, 154. The driving friction disks 148 have external teeth (not shown) that engage the internal teeth 140 of the outer sleeve 134. The driving friction disks 148 are therefore rotationally fixed to the outer sleeve 134. The driven friction disks 150 have internal teeth (not shown) that engage external teeth 156 (Fig. 11) defined by the driven member 146. The driven friction disks 150 are rotationally fixed to the driven member 146. A clip 158 is connected to the outer sleeve 134 and prevents the front annular plate 152 from moving forward. A spring 160 is disposed radially between the outer and inner sleeves 134, 136 of the gear 132 and axially between the web 138 of the gear 132 and the rear annular plate 154. The spring 156 applies pressure onto the clutch 144 to compress the driving and driven friction disks 148, 150. When the torque applied to the clutch 144 is less than a slip torque of the clutch 144, the outer sleeve 134 of the gear 132 and the driven member 146 rotate together. The clutch 144 and spring 156 are designed and selected such that the clutch 144 has a slip torque that is sufficiently high so that during normal operation of the airplane 10, the clutch 144 does not slip and the outer sleeve 134 and the driven member 146 rotate together. Should the torque applied to the clutch 144 exceed the slip torque of the clutch 144, the driving and driven friction disks 148, 150 slip relative to each other and the outer sleeve 134 and the driven member 146 no longer rotate together. For example, should the propeller 34 hit the ground during a difficult landing, the torque applied to the clutch 144 exceeds the slip torque of the clutch 144, causing the clutch 144 to slip, thereby preventing the force of the impact to be transferred to the engine 28, thus helping to prevent damage to the engine 28. In one implementation, the slip torque of the clutch 144 is 600 Nm, but other slip torques are contemplated.

A seal 162 is disposed radially between the driven member 146 and an annular flange 164 defined by the portion 110A of the housing 108. The inner sleeve 136 of the gear 132 is disposed radially between the driven member 146 and the output shaft 102, but is not rotationally fixed to the driven member 146 and the output shaft 102. A seal 166 is disposed radially between the driven member 146 and the output shaft 102 in front of the inner sleeve 146 of the gear 132.

The driven member 146 is integrally formed with an input member 168 of a flexible coupling assembly 170. It is contemplated that the driven member 146 and the input member 168 could be connected by other means such as by fasteners, splines, welding or press-fitting for example. The input member 168 is disposed forward of the annular flange 164. The flexible coupling assembly 170 also includes a flex disc 172, bolts 174, bolts 176 and an output member 178. The input member 168 is fastened to the flex disc 170 by the bolts 174. The output member 178 is fastened to the flex disc 172 by the bolts 176. The flex disc 172 is disposed between the input and output members 168, 178. The output member 178 defines internal splines 180 (Fig. 11). The internal splines 180 engage external splines (not shown) defined on a portion 182 of the output shaft 102 to rotationally fix the output member 178 of the flexible coupling assembly 170 to the output shaft 102 such that the output member 178 can drive the output shaft 102. The flexible coupling assembly 170 will be described in greater detail below with respect to Fig. 11.

From the portion 182, the output shaft 102 extends rearward and out of the rear of the housing 108. The rear end of the output shaft 102 is rotationally supported by a bearing (not shown). The bearing is supported inside a recess (not shown) formed in the front of the engine 28. A clip 184 is inserted in a notch in the output shaft 102 behind the rear end of the inner sleeve 136 of the gear 132. As a result, the output shaft 102 is prevented from sliding axially out of the front of the housing 108. The output shaft 102 is rotationally supported by a ball bearing 186 located in the front portion of the portion 110B of the housing 108. The bearing 186 has an outer race 188 and an inner race 190. The outer race 188 is held between tabs 192 (Fig. 7) fastened to the portion 110B of the housing 108 and a step 194 formed in the portion 110B of the housing 108. The inner race 186 is disposed in front of an inner portion of the output member 178 of the flexible coupling assembly 170. The inner race 186 and the output member 178 are held between a screw nut 194 threaded onto the output shaft 102 behind the output member 178 and a step 196 formed by the output shaft 102 in front of the inner race 186. As a result of this arrangement, the bearing 186 and its associated components limit the axial displacement of the output shaft 102. The bearing 186 has integrated seals, but it is contemplated that a bearing seal could be disposed in front the bearing 186.

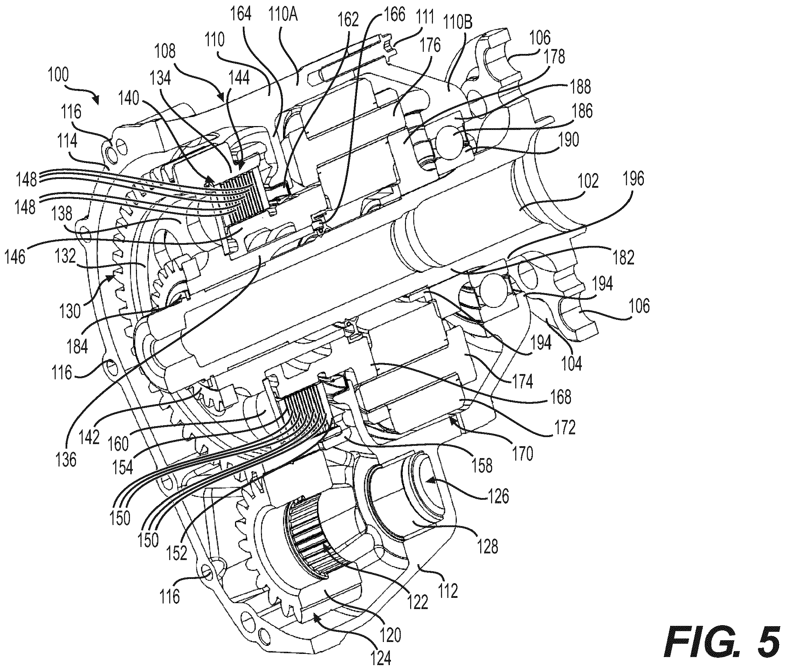

When the engine 28 is in operation, the crankshaft 30 drives the input gear 120, the input gear 120 drives the gear 132, the gear 132 drives the clutch 144 (which does not slip), the clutch 144 drives the flexible coupling assembly 170, the flexible coupling assembly 170 drives the output shaft 102, and the output shaft 102 drives the propeller 26. As best seen in Figs. 5 and 7, the output shaft 102, the gear 132, the clutch 144 and the flexible coupling assembly 170 are coaxial and rotate about a rotation axis 198 (Fig. 7). The input gear 120 rotates about an axis of rotation 199 (Fig. 7).

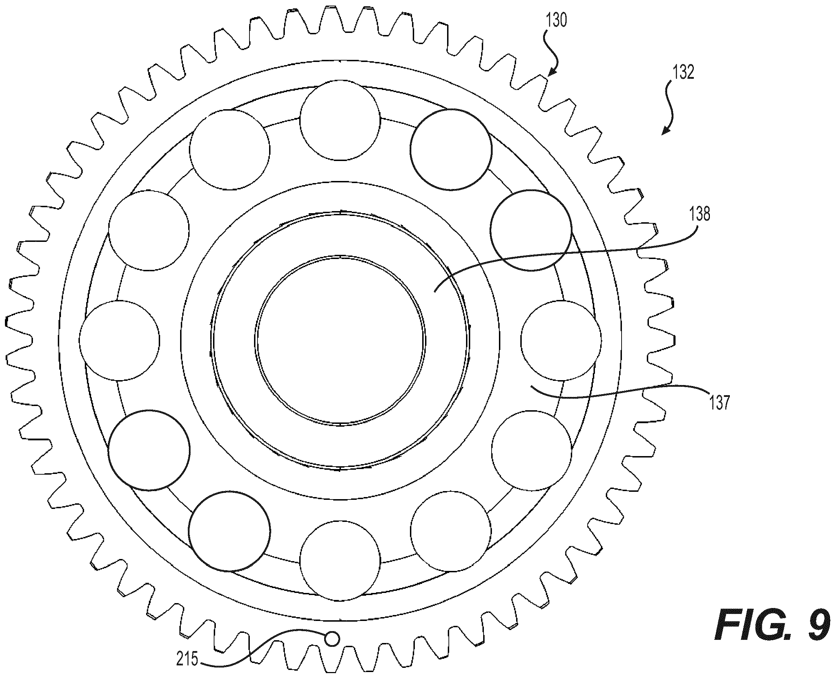

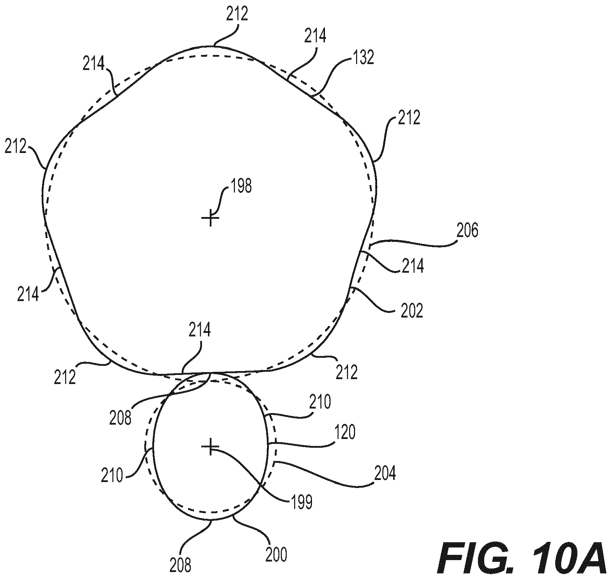

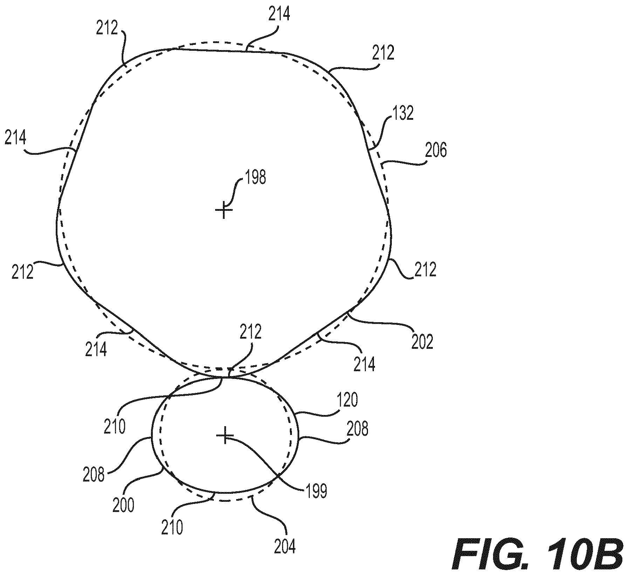

Turning now to Figs. 8 to 10B the gears 120 and 132 will be described in more detail. Although the gear 120 and the gear 132 may appear to be circular in Figs. 8 and 9, the gears 120 and 132 are actually non-circular. The gear 120 illustrated in Fig. 8 has a variation from a circular shape of ±1.35 percent. The gear 132 illustrated in Fig. 9 has a variation from a circular shape of ±0.54 percent. It is contemplated that the gears 120 and 132 could have a greater or smaller deviation from a circular shape. As such a small variation is difficult to see, in order to facilitate understanding, the pitch circle 200 of the gear 120 and the pitch circle 202 of the gear 132 have been drawn in Figs. 10A and 10B with a variation from their corresponding best fit circles 204, 206 (shown in dotted lines) of 12.5 percent and 5 percent respectively. As can be seen in Figs. 10A and 10B, the pitch circle 200, and therefore the driving gear 120, is generally oval. As such it has two lobes 208 (i.e. the portions of the pitch circle 200 extending outside the best fit circle 204) and two depressions 210 (i.e. the portions of the pitch circle 200 extending inside the best fit circle 204). As can also be seen in Figs. 10A and 10B, the pitch circle 202, and therefore the gear 132, generally has the shape of a rounded pentagon. As such it has five lobes 212 (i.e. the portions of the pitch circle 202 extending outside the best fit circle 206) and five depressions 214 (i.e. the portions of the pitch circle 202 extending inside the best fit circle 206). As the input gear 120 rotates, the lobes 208 of the driving gear 120 engage the depressions 214 of the gear 132 (see Fig. 10A) and the depressions 210 of the driving gear 120 engage the lobes 212 of the gear 132 (see Fig. 10B). As such, even though they are non-circular gears, the gears 120 and 132 engage and rotate relative to each other while a distance between their axes of rotation 198, 199 remains constant. The axes of rotation 198, 199 are located at a center of their respective gears 132, 120.

As the gears 120, 132 rotate, the gear ratio between the gears 120, 132 also varies due to the non-circularity of the gears. The set of gears 120, 132 has a mean gear ratio which corresponds to the ratio of the diameters of the best fit circles 204, 206. The mean gear ratio can also be determined by doing a ratio of the number of teeth 124, 130 of the gears 120, 132. In the present implementation, the driving gear 120 has twenty-two teeth 124 and the gear 132 has fifty-five teeth 130. As such, in the present implementation, the set of gears 120, 132 has a mean gear ratio of 2.5. It is contemplated that the gears 120, 132 could have different best fit circles 204, 206, and a different number of teeth 124, 130, and therefore a different mean gear ratio. When one of the lobes 208 of the driving gear 120 engages one of the depressions 214 of the gear 132, the gear ratio is reduced. When one of the depressions 210 of the driving gear 120 engages one of the lobes 214 of the gear 132, the gear ratio is increased. In the present implementation, the minimum gear ratio is 2.455 and the maximum gear ratio is 2.545. The minimum gear ratio occurs when the gears 120, 132 are in the position shown in Fig. 10A. The maximum gear ratio occurs when the gears 120, 132 are in the position shown in Fig. 10B. Therefore, the gear ratio varies by ±1.8 percent from the mean gear ratio. It is contemplated that the gear ratio could vary by more or less than ±1.8 percent. In some implementations, the gear ratio varies by at least ±1.0 percent.

The variation in gear ratio has a resulting variation in the speed of rotation of the gears 120, 132. By properly aligning the input gear 120 on the crankshaft 30 during assembly of the propeller drive system 100 on the engine 28, the variation in gear ratio can reduce the variation in speed of rotation of the gear 132. To facilitate this alignment, an indentation 211 (Fig. 8) is provided on the front of the input gear 120 that is to be aligned with an indentation (not shown) on the crankshaft 30 during assembly. Similarly, an indentation 215 (Fig. 9) is provided on the front of the gear 132 that is to be aligned with the indentation 211 of the input gear 120 during assembly. It is contemplated that other types of alignment features could be used instead of the indentations 211, 215 such as, but not limited to, keys and asymmetric splines. As previously explained, during operation of the engine 28 the speed of rotation of the crankshaft 30 increases and decreases during each rotation of the crankshaft 30. In the present implementation of the fuel injected, four-stroke, four-cylinder, boxer engine 28, during operation of the engine 28 the speed of rotation of the crankshaft 30 increases twice and decreases twice per rotation of the crankshaft 30. By aligning the driving gear 120 on the crankshaft 30 such that at the maximum speed of rotation of the crankshaft 30 the gear ratio is at its maximum (i.e. a depression 210 engages a lobe 212 as in Fig. 10B) and that at the minimum speed of rotation of the crankshaft 30 the gear ratio is at its minimum (i.e. a lobe 208 engages a depression 214 as in Fig. 10A), the variation in the speed of rotation of the gear is reduced. The speed of rotation of the input gear 120 varies directly with the change in speed of rotation of the crankshaft, but the speed of rotation of the gear 132 varies by a quotient of the change in speed of rotation of the crankshaft 30 and the change in gear ratio. As such, in the present implementation, should the speed of rotation of the crankshaft 30, and therefore the speed of rotation of the driving gear 120, vary by ±1.8 percent, which corresponds to the variation in gear ratio, then by properly aligning the driving gear 120 on the crankshaft 30 during installation of the propeller drive system 100 on the engine 28, the speed of rotation of the gear 132 does not change and remains constant. Should the speed of rotation of the crankshaft 30 vary by more than ±1.8 percent, then the speed of rotation of the gear 132 will vary, but less than if the gear ratio was constant. Reducing the variation in speed of the gear 132 contributes to diminishing stress and wear of the components of the propeller drive system 100 since, as previously explained, the speed of rotation of the propeller 26 that is mounted to the output shaft 102, which is driven indirectly by the gear 132, tends to remain constant. The variation in gear ratio, and therefore the percentage of variation from a circular shape of the gears 120, 132, is selected based on the variation of the speed of rotation of the crankshaft 30 during operation of the engine 28.

The number of lobes 208 and depressions 210 on the driving gear 120 depends on the type of engine 28. In the present implementation, the engine 28 is a four-stroke, four-cylinder, boxer engine 28. Each cylinder has one power stroke and one compression stroke for every two rotations of the crankshaft 30. As a result, for each rotation of the crankshaft 30, there are two power strokes and two compression strokes. These combustion forces and the forces of the oscillating and rotating masses of the engine 28 cause the crankshaft 30 to reach its maximum speed of rotation twice and its minimum speed of rotation twice per rotation of the crankshaft 30. The angular positions of the crankshaft 30, where the maximum and minimum speeds of rotation occur, alternate (i.e. maximum, minimum, maximum, minimum) and are 90 degrees apart from each other. Therefore, the driving gear 120 is provided with two lobes 208 and two depressions 210. In an implementation where for each rotation of the crankshaft 30, the crankshaft 30 would reach its maximum speed of rotation four times and its minimum speed of rotation four times, the driving gear 120 would therefore have four lobes 208 and four depressions 210. In more general terms, the driving gear 120 is a n^{th} order non-circular gear, where n is the number of lobes 208 and the number of depressions 210, and n corresponds to the number of times the crankshaft 30 reaches it maximum (or minimum) speed of rotation per rotation of the crankshaft 30.

The number of lobes 212 and depressions 214 on the gear 132 depends on the number of lobes 208 and depressions 210 on the gear 120 and the mean gear ratio of the set of gears 120, 132. In general terms, the gear 132 is a x^{th} order non-circular gear, where x is the number of lobes 212 and the number of depressions 212, and x corresponds to the order value n of the driving gear 120 (i.e. the number of lobes 208 or depressions 210) multiplied by the mean gear ratio. In the implementation illustrated in the figures, the driving gear 120 is a second order non-circular gear (i.e. the gear 120 has two lobes 208 and two depressions 210, therefore n=2) and the mean gear ratio is 2.5. Therefore, the gear 132 is a fifth order non-circular gear (2 x 2.5 = 5) and, accordingly, has five lobes 212 and five depressions 214.

Turning now to Fig. 11, the flexible coupling assembly 170 will be described in more detail. The flex disc 172, which is sometimes referred to as a Giubo or Hardy disc, is made of a flexible material that is sufficiently strong to transmit the torque between the input and output members 168, 178 such as synthetic rubber that may or may not be fiber-reinforced. The input member 168 has three legs 216 each having an internally threaded aperture 218 defined therein. Three bolts 174 are inserted through a front of the flex disc 172 into metal sleeves 219 inserted into apertures in the flex disc 172 and are fastened into the three apertures 218 of the input member 168 that abuts the rear side of the flex disc 172. Similarly, the output member 178 has three legs 220 each having an internally threaded aperture 222 defined therein. Three bolts 176 are inserted through a rear of the flex disc 172 into metal sleeves (not shown) inserted into apertures in the flex disc 172 and are fastened into the three apertures 222 of the output member 178 that abuts the front side of the flex disc 172. As can be seen, the bolts 174, 176 are arranged in an alternating arrangement. The flex disc 172 has three regions 224 of increased thickness each receiving one bolt 174 and one bolt 176. It is contemplated that the regions 224 could be omitted. It is also contemplated that there could be more or less bolts 174, 176, with a corresponding number of apertures 218, 222 in the members 168, 178. It is also contemplated that there could be a number of bolts 174 that is different from the number of bolts 176, with a corresponding number of apertures 218, 222 in the members 168, 178. It is also contemplated that the bolts 174 and/or the bolts 176 could be replaced by another type of fastener. As a result of the above described assembly 170, the input and output members 168, 178 are not connected directly to each other, but rather through the flex disc 172, and therefore torque is transferred between the input and output members 168, 178 via the flex disc 172.

In an alternative implementation, the flexible coupling assembly 170 is a spider coupling assembly. In such an implementation, the input and output members 168, 178 have axially extending teeth and the flex disc 172 is replaced by an elastomeric spider. The teeth of the input and output members 168, 178 alternately engage lobes of the elastomeric such that torque is transferred between the input and output members 168, 178 by the spider.

Although the non-circularity of the gears 120, 132 contributes to reducing the variation in speed of rotation of the gear 132, there may still be a difference in speed due to this variation between the speed of rotation of the gear 132 and the speed of rotation of the output shaft 102. In the present implementation, the input member 168 rotates at the same speed as the gear 132 and the output member 178 rotates at the same speed as the output shaft 102. As the flex disc 172 is flexible, it can deform to compensate at least partially for the speed differences. As such the flexible coupling assembly 170 dampens the torsional vibrations between the gear 132 and the output shaft 102. Therefore the flexible coupling assembly 170 also contributes to diminish the stress and wear of the propeller drive system 100.

Modifications and improvements to the above-described implementations of the present technology may become apparent to those skilled in the art. The foregoing description is intended to be exemplary rather than limiting. The scope of the present technology is therefore intended to be limited solely by the scope of the appended claims.

## Claims

1. An aircraft propeller drive system (100) for an aircraft (10), having an intermittent combustion internal combustion engine (28) via the propeller drive system (100), the propeller drive system (100) comprising:
a first non-circular gear (120) adapted to be operatively connected to and driven by the engine (28), the first non-circular gear (120) having a plurality of lobes (208) and a plurality of depressions (210);
a second non-circular gear (132) driven by the first non-circular gear (120), the second non-circular gear (132) having a plurality of lobes (212) and a plurality of depressions (214), the first and second non-circular gears (120, 132) having a variable gear ratio;
a flexible coupling assembly (170) driven by the second non-circular gear (132); and
an output shaft (102) driven by the flexible coupling assembly (170), the output shaft (102) being adapted for being connected to the propeller (26);
**characterized in that**:
the second non-circular gear (132) has:
a number of lobes (212) corresponding to a number of power strokes of the engine (28) per rotation of a crankshaft (30) of the engine (28) multiplied by a mean gear ratio of the first and second non-circular gears (120, 132); and
a number of depressions (214) corresponding to the number of power strokes of the engine (28) per rotation of the crankshaft (30) multiplied by the mean gear ratio.

2. The aircraft propeller drive system (100) of claim 1, wherein, during operation, a variation in speed of rotation of the second non-circular gear (132) is smaller than a variation in speed of rotation of the first non-circular gear (120).

3. The aircraft propeller drive system (100) of claim 1 or 2, wherein the variable gear ratio varies by at least ±1.0 percent.

4. The aircraft propeller drive system (100) of claim 3, wherein the variable gear ratio varies by ±1.8 percent.

5. The aircraft propeller drive system (100) of any one of claims 1 to 4, wherein the first non-circular gear (120) has:
a number of lobes (208) corresponding to a number of power strokes of the engine (28) per rotation of a crankshaft (30) of the engine (28); and
a number of depressions (210) corresponding to the number of power strokes of the engine (28) per rotation of the crankshaft (30).

6. The aircraft propeller drive system (100) of any one of claims 1 to 5, wherein the first non-circular gear (120) has two lobes (208) and two depressions (210).

7. The aircraft propeller drive system (100) of any one of claims 1 to 6, wherein the second non-circular gear (132) has five lobes (212) and five depressions (214).

8. The aircraft propeller drive system (100) of any one of claims 1 to 7, wherein the flexible coupling assembly (170) includes:
an input member (168) connected to and driven by the second non-circular gear (132);
a flex disc (172) connected to and driven by the input member (168); and
an output member (178) connected to and driven by the flex disc (172), the flex disc (172) being disposed between the input and output members (168, 178), the output member (178) being connected to and driving the output shaft (102), the flex disc (172) dampening torsional vibrations between the input and output members (168, 178).

9. The aircraft propeller drive system (100) of any one of claims 1 to 8, further comprising a clutch (144) operatively connecting the second non-circular gear (132) to the flexible coupling assembly (170).

10. The aircraft propeller drive system (100) of any one of claims 1 to 9, wherein the engine (28) is a four-stroke, four-cylinder engine (28).

11. The aircraft propeller drive system (100) of any one of claims 1 to 10, wherein the second non-circular gear (132), the flexible coupling assembly (170) and the output shaft (102) are coaxial and are rotatable about a common rotation axis (198).

12. An aircraft (10) comprising:
a fuselage (12);
wings (20) connected to the fuselage (12);
an intermittent combustion internal combustion engine (28) connected to one of:
the fuselage (12), and
one of the wings (20);
a propeller drive system (100) according to any one of claim 1 to 11 connected to the engine (28); and
a propeller (26) connected to the propeller drive system (100) and driven by the engine (28) via the propeller drive system (100).

## Patentansprüche

1. Flugzeugpropellerantriebssystem (100) für ein Flugzeug (10) mit einem Verbrennungsmotor (28) mit intermittierender Verbrennung zum Antreiben eines Propellers (26) über das Antriebssystem des Propellers (100), wobei das Propellerantriebssystem (100), umfasst:
ein erstes nicht kreisförmiges Zahnrad (120), das derart angepasst ist, dass es mit dem Motor (28) wirkend verbunden ist und durch diesen angetrieben wird, wobei das erste nicht kreisförmige Zahnrad (120) mehrere Nocken (208) und mehreren Vertiefungen (210) aufweist;
ein zweites nicht kreisförmiges Zahnrad (132), das durch das erste nicht kreisförmige Zahnrad (120) angetrieben wird, wobei das zweite nicht kreisförmige Zahnrad (132) mehrere Nocken (212) und mehreren Vertiefungen (214) aufweist und die ersten und zweiten nicht kreisförmigen Zahnräder (120, 132) ein variables Übersetzungsverhältnis aufweisen;
eine elastische Kupplungsanordnung (170), die durch das zweite nicht kreisförmige Zahnrad (132) angetrieben wird; und
eine Abgangswelle (102), die durch die elastische Kupplungsanordnung (170) angetrieben wird, wobei die Abgangswelle (102) angepasst ist, mit dem Propeller (26) verbunden zu sein;
**dadurch gekennzeichnet, dass**:
das zweite nicht kreisförmige Zahnrad (132) aufweist:
eine Anzahl an Nocken (212), die einer Anzahl an Arbeitstakten des Motors (28) pro Drehbewegung einer Kurbelwelle (30) des Motors (28) multipliziert mit einem mittleren Übersetzungsverhältnis der ersten und zweiten nicht kreisförmigen Zahnräder (120, 132) entspricht; und
eine Anzahl an Vertiefungen (214), welche der Anzahl an Arbeitstakten des Motors (28) pro Drehbewegung der Kurbelwelle (30) multipliziert mit dem mittleren Übersetzungsverhältnis entspricht.

2. Flugzeugpropellerantriebssystem (100) nach Anspruch 1, wobei während des Betriebs eine Änderung der Drehgeschwindigkeit des zweiten nicht kreisförmigen Zahnrades (132) kleiner ist als eine Änderung der Drehgeschwindigkeit des ersten nicht kreisförmigen Zahnrades (120).

3. Flugzeugpropellerantriebssystem (100) nach Anspruch 1 oder 2, wobei das variable Übersetzungsverhältnis um mindestens ±1,0 Prozent variiert.

4. Flugzeugpropellerantriebssystem (100) nach Anspruch 3, wobei das variable Übersetzungsverhältnis um ±1,8 Prozent variiert.

5. Flugzeugpropellerantriebssystem (100) nach einem der Ansprüche 1 bis 4, wobei das erste nicht kreisförmige Zahnrad (120) aufweist:
eine Anzahl an Nocken (208), die einer Anzahl an Arbeitstakten des Motors (28) pro Drehbewegung einer Kurbelwelle (30) des Motors (28) entsprechen; und
eine Anzahl an Vertiefungen (210), die der Anzahl an Arbeitstakten des Motors (28) pro Drehbewegung der Kurbelwelle (30) entsprechen.

6. Flugzeugpropellerantriebssystem (100) nach einem der Ansprüche 1 bis 5, wobei das erste nicht kreisförmige Zahnrad (120) zwei Nocken (208) und zwei Vertiefungen (210) aufweist.

7. Flugzeugpropellerantriebssystem (100) nach einem der Ansprüche 1 bis 6, wobei das zweite nicht kreisförmige Zahnrad (132) fünf Nocken (212) und fünf Vertiefungen (214) aufweist.

8. Flugzeugpropellerantriebssystem (100) nach einem der Ansprüche 1 bis 7, wobei die elastische Kupplungsanordnung (170) umfasst:
ein Eingangselement (168), das mit dem zweiten nicht kreisförmigen Zahnrad (132) verbunden ist und durch dieses angetrieben wird;
eine elastische Scheibe (172), die mit dem Eingangselement (168) verbunden ist und durch dieses angetrieben wird; und
ein Ausgangselement (178), das mit der elastischen Scheibe (172) verbunden ist und durch diese angetrieben wird, wobei die elastische Scheibe (172) zwischen den Eingangs- und Ausgangselementen (168, 178) angeordnet ist, das Ausgangselement (178) mit der Abgangswelle (102) verbunden ist und diese antreibt und die elastische Scheibe (172) die Drehschwingungen zwischen den Eingangs- und Ausgangselementen (168, 178) dämpft.

9. Flugzeugpropellerantriebssystem (100) nach einem der Ansprüche 1 bis 8, ferner umfassend eine Kupplung (144), die das zweite nicht kreisförmige Zahnrad (132) mit der elastischen Kupplungsanordnung (170) wirkend verbindet.

10. Flugzeugpropellerantriebssystem (100) nach einem der Ansprüche 1 bis 9, wobei der Motor (28) ein Viertakt-Vierzylindermotor (28) ist.

11. Flugzeugpropellerantriebssystem (100) nach einem der Ansprüche 1 bis 10, wobei das zweite nicht kreisförmige Zahnrad (132), die elastische Kupplungsanordnung (170) und die Abgangswelle (102) koaxial sind und über eine gemeinsame Drehachse (198) drehbar sind.

12. Flugzeug (10), umfassend:
einen Flugzeugrumpf (12);
Flügel (20), die mit dem Flugzeugrumpf (12) verbunden sind;
einen Verbrennungsmotor (28) mit intermittierender Verbrennung, der mit einem verbunden ist von:
dem Flugzeugrumpf (12) und
einem der Flügel (20);
ein Propellerantriebssystem (100) nach einem von Anspruch 1 bis 11, das mit dem Motor (28) verbunden ist; und
einen Propeller (26), der mit dem Propellerantriebssystem (100) verbunden ist und durch den Motor (28) über das Propellerantriebssystem (100) angetrieben wird.

## Revendications

1. Système d'entraînement d'hélice d'avion (100) pour un avion (10) ayant un moteur à combustion interne à combustion intermittente (28) permettant d'entraîner une hélice (26) par le biais du système d'entraînement d'hélice (100), le système d'entraînement d'hélice (100) comprenant :
une première roue dentée non circulaire (120) conçue pour être raccordée de manière fonctionnelle au moteur (28) et pour être entraînée par ce dernier, la première roue dentée non circulaire (120) ayant une pluralité de lobes (208) et une pluralité de renfoncements (210) ;
une deuxième roue dentée non circulaire (132) entraînée par la première roue dentée non circulaire (120), la deuxième roue dentée non circulaire (132) ayant une pluralité de lobes (212) et une pluralité de renfoncements (214), les première et deuxième roues dentées non circulaires (120, 132) ayant un rapport d'engrenage variable ;
un ensemble de couplage flexible (170) entraîné par la deuxième roue dentée non circulaire (132) ; et
un arbre de sortie (102) entraîné par l'ensemble de couplage flexible (170), l'arbre de sortie (102) étant conçu pour être raccordé à l'hélice (26) ;
**caractérisé en ce que** :
la deuxième roue dentée non circulaire (132) comporte :
un nombre de lobes (212) correspondant au nombre de courses de propulsion du moteur (28) par rotation d'un vilebrequin (30) du moteur (28) multiplié par un rapport d'engrenage moyen des première et deuxième roues dentées non circulaires (120, 132) ; et
un nombre de renfoncements (214) correspondant au nombre de courses de propulsion du moteur (28) par rotation du vilebrequin (30) multiplié par le rapport d'engrenage moyen.

2. Système d'entraînement d'hélice d'avion (100) selon la revendication 1, dans lequel, en fonctionnement, une variation de la vitesse de rotation de la deuxième roue dentée non circulaire (132) est inférieure à une variation de la vitesse de rotation de la première roue dentée non circulaire (120).

3. Système d'entraînement d'hélice d'avion (100) selon la revendication 1 ou 2, dans lequel le rapport d'engrenage variable varie d'au moins ± 1,0 pour cent.

4. Système d'entraînement d'hélice d'avion (100) selon la revendication 3, dans lequel le rapport d'engrenage variable varie de ± 1,8 pour cent.

5. Système d'entraînement d'hélice d'avion (100) selon l'une quelconque des revendications 1 à 4, dans lequel la première roue dentée non circulaire (120) comporte :
un nombre de lobes (208) correspondant au nombre de courses de propulsion du moteur (28) par rotation d'un vilebrequin (30) du moteur (28) ; et
un nombre de renfoncements (210) correspondant au nombre de courses de propulsion du moteur (28) par rotation du vilebrequin (30) .

6. Système d'entraînement d'hélice d'avion (100) selon l'une quelconque des revendications 1 à 5, dans lequel la première roue dentée non circulaire (120) comporte deux lobes (208) et deux renfoncements (210).

7. Système d'entraînement d'hélice d'avion (100) selon l'une quelconque des revendications 1 à 6, dans lequel la deuxième roue dentée non circulaire (132) comporte cinq lobes (212) et cinq renfoncements (214).

8. Système d'entraînement d'hélice d'avion (100) selon l'une quelconque des revendications 1 à 7, dans lequel l'ensemble de couplage flexible (170) comprend :
un élément d'entrée (168) raccordé à la deuxième roue dentée non circulaire (132) et entraîné par cette dernière ;
un disque amortisseur (172) raccordé à l'élément d'entrée (168) et entraîné par ce dernier ; et
un élément de sortie (178) raccordé au disque amortisseur (172) et entraîné par ce dernier, le disque amortisseur (172) étant disposé entre les éléments d'entrée et de sortie (168, 178), l'élément de sortie (178) étant raccordé à l'arbre de sortie (102) et entraînant ce dernier, le disque amortisseur (172) amortissant les vibrations de torsion entre les éléments d'entrée et de sortie (168, 178).

9. Système d'entraînement d'hélice d'avion (100) selon l'une quelconque des revendications 1 à 8, comprenant en outre un embrayage (144) raccordant de manière fonctionnelle la deuxième roue dentée non circulaire (132) à l'ensemble de couplage flexible (170).

10. Système d'entraînement d'hélice d'avion (100) selon l'une quelconque des revendications 1 à 9, dans lequel le moteur (28) est un moteur quatre temps à quatre cylindres (28).

11. Système d'entraînement d'hélice d'avion (100) selon l'une quelconque des revendications 1 à 10, dans lequel la deuxième roue dentée non circulaire (132), l'ensemble de couplage flexible (170) et l'arbre de sortie (102) sont coaxiaux et peuvent tourner sur un axe de rotation commun (198).

12. Avion (10) comprenant :
un fuselage (12) ;
des ailes (20) raccordées au fuselage (12) ;
un moteur à combustion interne à combustion intermittente (28) raccordé :
soit au fuselage (12),
soit à l'une des ailes (20) ;
un système d'entraînement d'hélice (100) selon l'une quelconque des revendications 1 à 11 raccordé au moteur (28) ; et
une hélice (26) raccordée au système d'entraînement d'hélice (100) et entraînée par le moteur (28) par le biais du système d'entraînement d'hélice (100).
